# EUROPÄISCHE PATENTANMELDUNG

(11) **EP 4 647 613 A1**
(43) Veröffentlichungstag der Anmeldung: **12.11.2025**
(21) Anmeldenummer: 25174432.2
(22) Anmeldetag: 06.05.2025
(51) Int. Cl.: F16B 5/02

(54) **BAUGRUPPE FÜR DAS BEFESTIGEN EINES ZU BEFESTIGENDEN BAUTEILS AN EINEM ORTSFESTEN BAUTEIL**

(30) Priorität: 10.05.2024 AT 600882024; 10.05.2024 AT 600892024; 13.05.2024 AT 600912024; 10.05.2024 AT 1412024
(71) Anmelder: SIHGA GmbH, 4694 Ohlsdorf (AT)
(72) Erfinder: KAISER-MÜHLECKER, Benedikt, 4531 Kematen an der Krems (AT)

(57) **Zusammenfassung**

Die Erfindung betrifft eine Baugruppe (1, 12) für das Befestigen eines zu befestigenden Bauteils (2) in einstellbarem Abstand an einem ortsfesten Bauteil (3), wobei der zu befestigende Bauteil starr mit einer Scheibe (5) verbunden ist, welche durch einen Teil einer zentrale Schraubverbindung (4, 13) durchdrungen ist, welche sich durch den zu befestigenden Bauteil (2) hindurch in den ortsfesten Bauteil (3) hinein erstreckt. Die Scheibe (5) ist gegenüber einem Teil (7, 15) der zentralen Verschraubung (4, 13) welcher bei Drehung seiner selbst um die Gewindeachse (8) der zentralen Verschraubung parallel zur Gewindeachse gegenüber dem ortsfesten Bauteil (3) verschoben wird, um die Gewindeachse drehbar, aber nicht axial verschiebbar. Der besagte Teil (7, 15) der zentralen Verschraubung (4, 13) durchdringt dazu die Scheibe (5) in einer Öffnung (11), deren Querschnittsfläche zur Mantelfläche der Scheibe (5) hin offen ist.

## Beschreibung

Die Erfindung betrifft eine Baugruppe für das Befestigen eines zu befestigenden Bauteils an einem ortsfesten Bauteil, wobei ein Abstand zwischen den beiden Bauteilen einstellbar ist. Ein typischer Anwendungsfall für die erfindungsgemäße Baugruppe ist das Befestigen einer Richtschwelle in definierter Lage über der Oberseite einer Bauwerksfläche.

Eine Richtschwelle im Sinne diese Dokuments ist ein gerader Profilteil aus Holz, Metall oder Kunststoff, welcher über einer Bauwerksfläche fixiert ist, und Unterlage und Ankerbauteil für einen oder mehrere weitere, darauf von oben her aufliegende Teile darstellt. Derartige weitere Teile können beispielsweise Fertigteilwände oder Sparren eines Dachstuhls sein. Bestimmungsgemäß werden diese weiteren Teile mit Hilfe der Richtschwelle in genau definiert vorgegebene Höhe positioniert und fixiert.

Eine weit verbreitete Methode für das Verankern einer Richtschwelle über einer Bauwerksfläche die beispielsweise die Oberseite einer Betonplatte ist, umfasst die folgenden Schritte:
- Die an den vorgesehenen Verankerungspunkten mit vertikal verlaufenden Durchgangsbohrungen versehene Richtschwelle wird auf die Betonplatte aufgelegt.
- An den Stellen, an denen die Durchgangsbohrungen der Richtschwelle auf die Betonplatte treffen, wird jeweils eine vertikale verlaufende Bohrung in die Betonplatte gebohrt.
- Schrauben, welche dazu ausgelegt sind in der jeweiligen Bohrung im Beton selbst das zugehörige Mutterngewinde zu formen, werden durch die Durchgangsbohrungen in der Richtschwelle hindurch etwas in die Betonplatte hinein geschraubt.
- Die Richtschwelle wird mittels Stapeln von Keilen, welche zwischen ihrer unteren Fläche und der Betondecke eingeschoben werden, soweit angehoben dass ihre obere Fläche in eine gewünschte genau definierte Höhe gelangt.
- Die Schrauben werden soweit angezogen, dass die Unterseite des Schraubenkopfes an der Oberseite der Richtschwelle bzw. ggf. auf einer auf dieser aufliegenden beigelegten Scheibe zum Anliegen kommt, womit die Richtschwelle gegen Bewegung von der

Betonplatte weg fixiert ist.
- Der nur stellenweise durch Keile überbrückte Abstandsbereich zwischen der Richtschwelle und der Betonplatte wird mit aushärtbarer Mörtelmasse ausgefüllt.

Eine Schraube, welche unmittelbar in eine Bohrung in Beton einschraubbar ist, und sich dabei das Mutterngewinde selbst formt, ist beispielsweise in der EP 0623759 B1 beschrieben.

Die EP 0072965 A1 und die EP 0122368 A2 zeigen Baugruppen für das Befestigen von Latten von Wandverkleidungen in einstellbarem Abstand zu einer Wand. Eine Schraube verläuft durch eine Latte hindurch in die Wand. Ein mit Hilfe von Zusatzschrauben mit der Latte starr verbundener Zusatzteil überdeckt den Kopf der Schraube teilweise an dessen von der Latte und damit der Wand abgewandter Seite und bildet damit eine Anschlagfläche gegen axiale Relativbewegung des Schraubenkopfes von der Latte weg. Durch vermehrtes Ein- bzw. Ausdrehen der Schraube ist damit der Abstand der Latte zur Wand komfortabel fein einstellbar. Für das Befestigen von Richtschwellen ist die Baugruppe nicht anwendbar, weil die erzielbare Festigkeit gegen abhebend wirkende Kräfte zu gering ist.

Die DE 102015009230 B4 zeigt eine Baugruppe für das Befestigen einer Richtschwelle in einstellbarem Abstand über einer Betonplatte. Jede Befestigungsstelle der Richtschwelle mit der Betonplatte umfasst eine zentrale Schraubverbindung, welche durch eine verankerte Gewindestange und eine Gewindemutter gebildet ist, wobei die Gewindestange in der Betonplatte verankert ist und von dieser weg durch eine Schraubendurchgangsbohrung in der Richtschwelle hindurch ragt, und wobei an der von der Betonplatte abgewandten Seite die Gewindemutter aufgeschraubt ist. Die Gewindemutter ist mit einem hülsenartigen Fortsatz versehen, an welchem eine Scheibe angeordnet ist, welche gegenüber der Gewindeachse frei drehbar ist, gegen Bewegung in axialer Richtung der Gewindemutter aber in beide Richtungen durch Anschlagflächen blockiert ist. Die Scheibe ist mittels zusätzlicher Schrauben, die durch Schraubendurchgangsbohrungen in der Scheibe hindurch verlaufen, an der Richtschwelle fixiert. Durch Drehung der Gewindemutter ist damit die Position der Richtschwelle in Axialrichtung der Gewindestange komfortabel einstellbar. Nachteilig an der Bauweise ist, dass je Befestigungsstelle eine im Beton verankerte Gewindestange erforderlich ist, und dass die Herstellung der aus Gewindemutter und Scheibe bestehenden Baugruppe technisch sehr aufwändig ist.

Auch die EP 3567264 B1 zeigt eine Baugruppe für das Befestigen einer Richtschwelle in einem einstellbaren Abstand über einer Betonplatte. Eine zentrale Schraubverbindung wird dabei durch ein Mutterngewinde in der Betonplatte und eine Schraube gebildet, welche in Beton gewindeformend ist. Die Schraube verläuft durch eine Durchgangsbohrung in der Richtschwelle hindurch in eine Bohrung in der Betonplatte. Der Kopf der Schraube ist mit einer ringartigen Verbreiterung versehen. Diese Verbreiterung ragt in einen ringförmigen Spalt welcher an der Innenmantelfläche eines ringförmigen Gebildes ausgebildet ist, das aus zwei stirnseitig aneinander anliegenden separaten ringförmigen Scheiben gebildet ist. Das ringförmige Gebilde ist mittels zusätzlicher Schrauben, welche in Holz selbstbohrend und gewindebildend sind starr mit der Richtschwelle verbunden. Durch Drehung der Betonschraube ist der Abstand der Richtschwelle zur Betonplatte einstellbar, da die Betonschraube gegenüber dem ringförmigen Gebilde zwar drehbar ist, nicht aber axial verschiebbar ist. Die Bauweise ermöglicht komfortables Einstellen des besagten Abstandes und hohe Festigkeit auch gegen wegziehende Belastungen. Nachteilig ist, dass sie viele Teile erfordert und dass fehlerhafte Montage nicht unmittelbar erkannt wird obwohl sie zu mangelhafter Festigkeit führt.

Von diesem Stand der Technik ausgehend hat sich der Erfinder die Aufgabe gestellt, eine Baugruppe für das Befestigen eines zu befestigenden Bauteils an einem ortsfesten Bauteil bereit zu stellen, mit Hilfe derer beispielsweise eine Richtschwelle komfortabel in einstellbarem Abstand über einer Betonplatte positioniert und fest fixiert werden kann. Gegenüber den besprochenen Bauweisen von Baugruppen für diesen Zweck soll der Aufwand für Herstellung und Montage verringert werden.

Zum Lösen der Aufgabe werden von den vorbekannten Bauweisen die folgenden Merkmale übernommen:
- Eine zentrale Schraubverbindung, welche einen Gewindebolzen und ein Mutterngewinde umfasst, erstreckt sich durch eine Durchgangsbohrung in dem zu befestigenden Bauteil hindurch in den ortfesten Bauteil hinein.
- Ein Teil der zentralen Schraubverbindung, welcher durch Drehbewegung um die Gewindeachse der zentralen Schraubverbindung herum entlang dieser Gewindeachse gegenüber dem ortsfesten Bauteil verschiebbar ist, durchdringt eine Scheibe.
- Die Scheibe ist gegen Relativbewegung parallel zur Gewindeachse gegenüber dem sie durchdringenden Teil in beiden Richtungen durch Anschlagflächen an diesem Teil blockiert, nicht jedoch gegen Drehbewegung relativ zu diesem Teil um die Gewindeachse herum.
- Die Scheibe ist mit dem zu befestigenden Bauteil starr verbunden.

Als erfindungsgemäße Verbesserung dazu wird vorgeschlagen, die Querschnittsfläche jener Öffnung, durch welche hindurch die Scheibe durch den axial verschiebbaren Teil der zentralen Schraubverbindung durchdrungen ist, zu einer Mantelflächenseite der Scheibe hin offen auszubilden.

Durch diese einfache Maßnahme ist erreichbar, dass sowohl die Scheibe, als auch der axial verschiebbare Teil der zentralen Schraubverbindung unabhängig voneinander mit sehr einfachen üblichen Fertigungsverfahren hergestellt werden können, und dass diese beiden Teile zur bestimmungsgemäßen Verbindung miteinander einfach passend ineinander geschoben werden können.

Damit werden sehr geringer Herstellungsaufwand, sehr geringer Montageaufwand, hoher Arbeitskomfort und intuitiv richtige und einfache Arbeitsweise erreicht.

Die Erfindung wird an Hand von Zeichnungen zu zwei beispielhaften Ausführungsformen veranschaulicht.
Fig. 1: zeigt eine erste beispielhafte erfindungsgemäße Baugruppe in Seitenansicht in montiertem Zustand.
Fig. 2: zeigt die Scheibe aus der Baugruppe von Fig. 1 allein in gegenüber Fig. 1 um 90° gedrehter Lage.
Fig. 3: zeigt eine zweite beispielhafte erfindungsgemäße Baugruppe in Seitenansicht in montiertem Zustand.
Fig. 4: Zeigt einen der Teile der zentralen Schraubverbindung der Baugruppe von Fig. 3 allein in Seitenansicht.

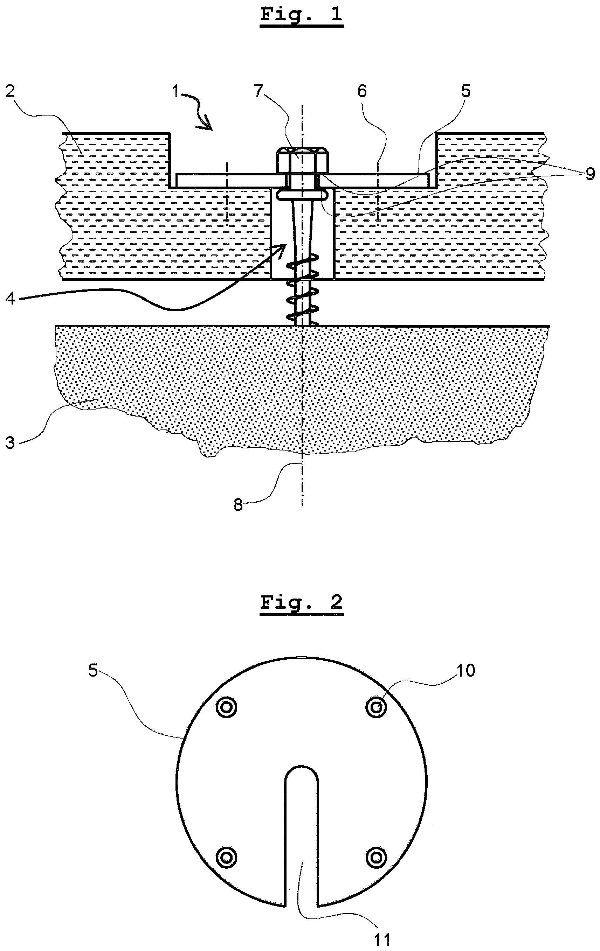

Fig. 1 zeigt eine erfindungsgemäße Baugruppe 1 für das Befestigen eines zu befestigenden Bauteils 2 in einem einstellbaren Abstand zu einem ortsfesten Bauteil 3. In diesem typischen Beispiel ist der Bauteil 2 eine Richtschwelle, und der Bauteil 3 eine Betonplatte. Die erfindungsgemäße Baugruppe 1 umfasst eine zentrale Schraubverbindung 4, eine Scheibe 5 und mehrere Zusatzschrauben 6, welche nur durch strichpunktierte Linien symbolisiert sind.

Die zentrale Schraubverbindung 4 umfasst eine Schraube 7 und ein Mutterngewinde in dem ortsfesten Bauteil 3. Der axial verschiebbare Teil der zentralen Schraubverbindung 4 ist damit die Schraube 7.

Der ortsfeste Bauteil 3 ist typischerweise aber nicht notwendigerweise ein massiver Gebäudeteil wie beispielsweise eine Betonplatte oder ein Mauersockel. Der zu befestigende Bauteil 2 ist typischerweise aber nicht notwendigerweise eine Richtschwelle.

Die Aufzählung der erfindungsgemäßen Merkmalskombination sei am Beispiel Fig. 1 kurz wiederholt:
- Die zentrale Schraubverbindung 4 umfasst die Schraube 7 und das zugehörige Mutterngewinde im ortsfesten Bauteil 2. Die Schraube 7 weist einen Gewindebolzen und einen Schraubenkopf auf. Die Schraube 7 erstreckt sich durch eine Durchgangsbohrung in dem zu befestigenden Bauteil 2 hindurch in den ortfesten Bauteil 3 hinein.
- Jener Teil der zentralen Schraubverbindung 4, welcher durch Drehbewegung um die Gewindeachse 8 der zentralen Schraubverbindung herum entlang dieser Gewindeachse 8 gegenüber dem ortsfesten Bauteil 3 verschiebbar ist und die Scheibe 5 durchdringt, ist die Schraube 7.
- Die Scheibe 5 ist gegen Relativbewegung parallel zur Gewindeachse 8 gegenüber dem sie durchdringenden Teil - der Schraube 7
- in beiden Richtungen durch Anschlagflächen 9 an diesem Teil blockiert, nicht jedoch gegen Drehbewegung relativ zu diesem Teil um die Gewindeachse 8 herum.
- Die Scheibe 5 ist mit dem zu befestigenden Bauteil 2 starr verbunden, nämlich durch die Zusatzschrauben 6, welche durch Schraubendurchgangsbohrungen 10 in der Scheibe 5 hindurch in das Material des zu befestigenden Bauteils 2 hinein verlaufen und mit diesem in Gewindeeingriff sind.
- Die Querschnittsfläche jener Öffnung 11 in der Scheibe 5, durch welche hindurch die Scheibe 5 durch den axial verschiebbaren Teil der zentralen Schraubverbindung 4 (die Schraube 7) durchdrungen ist, ist zu einer Mantelflächenseite der Scheibe 5 hin offen. Dadurch kann die Scheibe 5 durch eine Bewegung die parallel zu ihrer Ebene erfolgt, auf die Schraube 7 aufgesteckt werden.

Die beiden Anschlagflächen 9 sind in diesem Fall durch die untere Fläche des Kopfes der Schraube 7 und die obere Seite eines Wulstes am Bolzen der Schraube 7 gebildet.

Im Rahmen des Erfindungsgedankens wäre es auch möglich die Verbindung der Scheibe 5 mit dem zu befestigenden Teil 2 anders als mit Zusatzschrauben 6 zu verwirklichen. Wichtig ist vor allem, dass die Verbindung ausreichend stark ist um das Gewicht des zu befestigenden Teils 2 zu tragen.

Wenn der zu befestigende Bauteil 2 eine Richtschwelle ist, und der ortsfeste Bauteil 3 eine Betonplatte, kann das Befestigen der Richtschwelle in folgenden Arbeitsschritten erfolgen:
- Die Richtschwelle (2) wird auf die Betonplatte (3) gelegt, und die Schrauben 7 der zentralen Schraubverbindungen 7 werden durch Durchgangslöcher in der Richtschwelle (2) hindurch etwas in darunterliegende Bohrlöcher in der Betonplatte (3) eingeschraubt.
- Jeweils eine Scheibe 5 wird auf jeweils eine Schraube 7 so aufgesteckt, dass der zwischen den beiden Anschlagflächen 9 befindliche Längsbereich der Schraube 7 die schlitzförmige Öffnung 11 in der Scheibe 5 in deren tiefsten Querschnittsflächenbereich durchdringt.
- Die Schrauben 7 werden so weit in die Betonplatte (3) eingeschraubt, dass die Scheiben 5 von oben her auf der Richtschwelle (2) anliegen.
- Die Zusatzschrauben 6 werden von oben her durch die Schraubendurchgangsbohrungen 10 in den Scheiben 5 durchgesteckt und mit der darunterliegenden Richtschwelle (2) verschraubt.
- Die Schrauben 7 der zentralen Schraubverbindung 4 werden mit Hilfe eines Schraubendreherwerkzeuges, welches an dem jeweils oberhalb der Scheibe 5 liegenden Schraubenkopf der Schrauben 7 angreift, wieder etwas aus der Betonplatte (3) heraus geschraubt, wodurch die Richtschwelle (2), die ja nun mit den Scheiben 5 zugfest verbunden ist, angehoben wird. Das Herausschrauben der Schrauben 4 erfolgt so weit, dass die oberste Fläche der Richtschwelle (2) in die gewünschte Höhe über der Betonplatte (4) kommt.
- Der Spalt zwischen der Richtschwelle (2) und der Betonplatte (3) wird mit aushärtbarer Mörtelmasse ausgefüllt.

Am Beispiel gemäß Fig. 1 ist die mit einem Außengewinde versehene Schraube 7 jener Teil der zentralen Schraubverbindung 4, welcher bei Drehung um die Gewindeachse gegenüber dem ortsfesten Bauteil 3 axial verschoben wird. Das zugehörige stillstehende Mutterngewinde befindet sich in dem ortsfesten Bauteil 3.

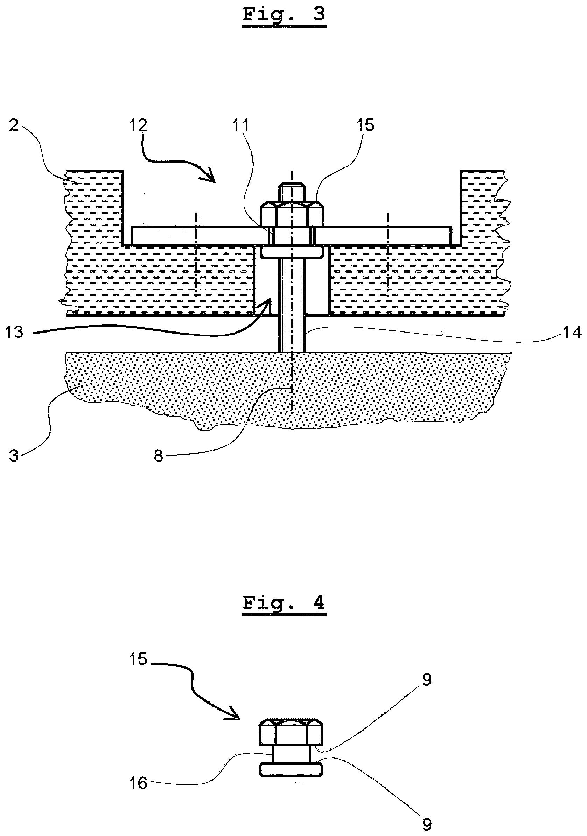

Fig. 3 zeigt das Erfindungsprinzip an einer Baugruppe 12, bei welcher der mit einem Außengewinde versehene Teil der zentralen Schraubverbindung 13 ortsfest ist, und der mit einem Mutterngewinde versehene Teil durch Drehung um die Gewindeachse 8 entlang der Gewindeachse 8 verschiebbar ist. Der ortsfeste Teil der zentralen Schraubverbindung 13 ist in diesem Fall eine Gewindestange 14, welche starr mit dem ortsfesten Bauteil 3 verbunden ist. Der besagte axial verschiebbare Teil mit Mutterngewinde ist eine Gewindemutter 15.

Die Gewindemutter 15 ist an ihrer dem ortsfesten Bauteil 2 zugewandten Seite mit einem hülsenartigen Fortsatz versehen welcher die Scheibe 5 durch deren Öffnung 11 in einer Spielpassung durch durchdringt. Die Gewindemutter 15 ist relativ zur Scheibe 5 um die Gewindeachse 8 herum drehbar. Relativbewegung der Scheibe 5 gegenüber der Gewindemutter in den zur Gewindeachse 8 parallelen Richtungen ist durch Anschlagflächen 9 blockiert. Die obere Anschlagfläche 9 ist durch die Unterseite des gegenüber dem hülsenartigen Fortsatz 16 verbreiterten, als Sechskant ausgebildeten oberen Teils der Gewindemutter 15 gebildet. Die untere Anschlagfläche 9 ist durch die Oberseite eines ringförmigen Wulstes an der Außenmantelfläche des hülsenartigen Fortsatzes 16 gebildet.

Als Scheibe 5 am Beispiel von Fig. 3 kann die gleiche dienen wie jene vom Beispiel von Fig. 1. Die Querschnittsfläche jener Öffnung 11 in der Scheibe 5, durch welche hindurch die Scheibe 5 durch den axial verschiebbaren Teil der zentralen Schraubverbindung 4 (die Gewindemutter 15) durchdrungen ist, ist zu einer Mantelflächenseite der Scheibe 5 hin offen. Dadurch kann die Scheibe 5 durch eine Bewegung die parallel zu ihrer Ebene erfolgt, auf die Gewindemutter 15 aufgesteckt werden. Am beweglichen Bauteil 2 gemäß Fig. 3 kann die Scheibe 5 genau gleich befestigt werden wie am beweglichen Bauteil 2 gemäß Fig. 1.

Bevorzugt ist bei allen Bauweisen der axial verschiebbare Teil der zentralen Schraubverbindung 4, 13 - wie dargestellt - an der im Einsatzfall vom ortsfesten Bauteil 3 abgewandten Seite mit einer Eingriffsgeometrie - beispielsweise wie dargestellt einem Außensechskant - für ein Schraubendreherwerkzeug versehen.

Bevorzugt bestehen die Scheibe 5 und jener Teil der zentralen Schraubverbindung, welcher die Anschlagflächen 9 aufweist, aus Stahl, weil damit kostengünstig und einfach die notwendige Festigkeit der Verbindung sicher erreichbar ist.

## Patentansprüche

1. Baugruppe (1, 12) für das Befestigen eines zu befestigenden Bauteils (2) in einstellbarem Abstand an einem ortsfesten Bauteil (3), wobei
- sich eine zentrale Schraubverbindung (4, 13) welche einen Gewindebolzen und ein Mutterngewinde umfasst durch eine Durchgangsbohrung in dem zu befestigenden Bauteil (2) hindurch in den ortsfesten Bauteil (3) hinein erstreckt, und
- ein Teil (7, 15) der zentralen Schraubverbindung (4, 13), welcher durch Drehbewegung um die Gewindeachse (8) der zentralen Schraubverbindung (4, 13) parallel zur Gewindeachse (8) gegenüber dem ortsfesten Bauteil (3) verschiebbar ist, eine Scheibe (5) durch eine Öffnung (11) hindurch durchdringt, und
- die Scheibe (5) gegen Relativbewegung parallel zur Gewindeachse (8) gegenüber dem sie durchdringenden Teil (7, 15) in beiden Richtungen durch Anschlagflächen (9) an diesem Teil (7, 15) blockiert ist, nicht jedoch gegen Drehbewegung relativ zu diesem Teil (7, 15) um die Gewindeachse (8) herum, und
- die Scheibe (5) mit dem zu befestigenden Bauteil (2) starr verbunden ist,
**dadurch gekennzeichnet, dass**
die Querschnittsfläche jener Öffnung (11), durch welche hindurch die Scheibe (5) durch den axial verschiebbaren Teil (7, 15) der zentralen Schraubverbindung (4, 13) durchdrungen ist, zu einer Mantelflächenseite der Scheibe (5) hin offen ist.

2. Baugruppe (1) nach Anspruch 1, **dadurch gekennzeichnet, dass** der Teil der zentralen Schraubverbindung (4, 13), welcher durch Drehbewegung um die Gewindeachse (8) der zentralen Schraubverbindung (4, 13) parallel zur Gewindeachse (8) gegenüber dem ortsfesten Bauteil (3) verschiebbar ist, eine Schraube (7) ist.

3. Baugruppe (1) nach Anspruch 2, **dadurch gekennzeichnet, dass** die Schraube (7) dazu ausgelegt ist, in einer Bohrung in Beton das Mutterngewinde selbst zu formen.

4. Baugruppe (12) nach Anspruch 1, **dadurch gekennzeichnet, dass** der Teil der zentralen Schraubverbindung (4, 13), welcher durch Drehbewegung um die Gewindeachse (8) der zentralen Schraubverbindung (4, 13) parallel zur Gewindeachse (8) gegenüber dem ortsfesten Bauteil (3) verschiebbar ist, eine Gewindemutter (15) ist.

5. Baugruppe (1, 12) nach einem der Ansprüche 1 bis 4, **dadurch gekennzeichnet, dass** die Scheibe (5) zusätzlich zu der Öffnung (11) Schraubendurchgangsbohrungen (10) aufweist, welche dazu vorgesehen sind, durch Zusatzschrauben (6) durchdrungen zu werden, welche zur Befestigung der Scheibe (5) an dem zu befestigenden Teil (2) vorgesehen sind.

6. Verwendung einer Baugruppe nach einem der Ansprüche1 bis 4 für das Befestigen einer Richtschwelle als den zu befestigenden Teil (2) über einer Bauwerksfläche.

7. Verwendung nach Anspruch 6, **dadurch gekennzeichnet, dass** die Bauwerksfläche die obere Begrenzungsfläche eines Betonkörpers ist.
